Europäisches Patentamt

European Patent Office

Office européen des brevets

(19)

(11) Veröffentlichungsnummer : **0 111 748**
**B1**

(12) **EUROPÄISCHE PATENTSCHRIFT**

(45) Veröffentlichungstag der Patentschrift :
25.03.87

(21) Anmeldenummer : 83111342.8

(22) Anmeldetag : 12.11.83

(51) Int. Cl.⁴ : **C 01 B 33/28**

(54) Aluminiumsilikate mit Zeolithstruktur und Verfahren zu ihrer Herstellung.

(30) Priorität : 16.11.82 DE 3242352
15.07.83 DE 3325514

(43) Veröffentlichungstag der Anmeldung :
27.06.84 Patentblatt 84/26

(45) Bekanntmachung des Hinweises auf die Patenterteilung : 25.03.87 Patentblatt 87/13

(84) Benannte Vertragsstaaten :
DE FR GB IT NL

(56) Entgegenhaltungen :
EP-A- 0 054 386
FR-A- 1 527 972
FR-A- 2 340 273
D.W. BRECK: "Zeolite molecular sieves", 1974, John
Wiley & Sons, New York, USA

(73) Patentinhaber : HOECHST AKTIENGESELLSCHAFT
Postfach 80 03 20
D-6230 Frankfurt am Main 80 (DE)

(72) Erfinder : Rieck, Hans-Peter, Dr.
Staufenstrasse 13a
D-6238 Hofheim am Taunus (DE)
Erfinder : Kalz, Hans-Jürgen, Dr.
Gartenstrasse 25
D-6238 Hofheim am Taunus (DE)

## Beschreibung

Die Erfindung bezieht sich auf synthetische kristalline, silikatreiche Phosphor enthaltende Zeolithe des ZSM-5-Typs sowie ein Verfahren zu ihrer Herstellung.

Verschiedene Zeolithe haben große technische Bedeutung erlangt, da sie als Ionenaustauscher, Molekularsiebe und Katalysatoren eingesetzt werden können. In letzter Zeit finden Zeolithe vom Pentasil-Typ, zu dem auch der Zeolith ZSM-5 gehört, zunehmendes Interesse, da sie bei verschiedenen Alkylierungen und Isomerisierungen sehr wirksam sind und die Umwandlung von Methanol in Olefine, Aromaten und — zu einem geringeren Teil — in gesättigte Kohlenwasserstoffe katalysieren.

Die Herstellung des Zeolith ZSM-5 erfolgt üblicherweise in Gegenwart organischer Stickstoff enthaltender Kationen, insbesondere Tetraalkylammonium-Kationen (US-A-3 702 886). Aber auch verschiedene andere organische Verbindungen wie Alkylamine, Alkylendiamine, Alkohole oder Ketone sind für diesen Zweck verwendet worden. Gemäß US-A-4 175 114 kann ein Zeolith vom ZSM-5-Typ auch in Gegenwart von Impfkristallen des Zeoliths, gegebenenfalls zusammen mit Ammoniumhydroxid und/oder Alkoholen gebildet werden. Eine ähnliche Synthese mit Hilfe von Alkoholen wird in der DE-A-2 643 929 beschrieben. Ammoniak kann als basische Komponente auch in Abwesenheit von Impfkristallen und Alkohol eingesetzt werden (EP-A-30 811). Es ist ferner bekannt, daß durch Zusatz von Phosphaten oder Phosphorsäure zum Reaktionsgemisch bei der Herstellung eines Zeoliths die Produktzusammensetzung und die Produkteigenschaften variiert werden können (D.W. Breck, « Zeolithe Molecular Sieves », 1974 S. 322-331 ; DE-A-3 137 729). In solchen Zeolithen liegt der Phosphor wahrscheinlich als Phosphat vor.

Die nachträgliche Behandlung eines Zeolithen mit organischen oder anorganischen Phosphorverbindungen kann zu Veränderungen der katalytischen Eigenschaften führen (DE-A-2 542 230).

Bei einigen dieser Verfahren sind die Ergebnisse schwer reproduzierbar. Häufig wird kein einwandfreier kristalliner Zeolith des ZSM-5-Typs gewonnen, da andere Aluminiumsilikate, z. B. Mordenit, anstelle von oder neben Zeolith ZSM-5 gebildet werden oder amorphe Produkte als Verunreinigungen anfallen. Es ist ein Nachteil, wenn organische Verbindungen zur Synthese einzusetzen sind, da diese im Gitter verbleiben und vor dem Einsatz des Zeoliths als Katalysator mittels Kalzinierung zersetzt werden müssen. Sie gehen daher für weitere Einsätze verloren.

Es bestand daher die Aufgabe, einen Zeolith des ZSM-5-Typs zu finden, der sich auf einfache und gut reproduzierbare Weise ohne Zusatz einer organischen Verbindung herstellen und in reiner Form gewinnen läßt.

Es wurde nun ein Zeolith des ZSM-5-Typs mit einem Mol-Verhältnis von

$SiO_2 : Al_2O_3$ von 15 bis 200,
$M_2O : SiO_2$ von $10^{-6}$ bis 1 und
$H_2O : SiO_2$ von 0 bis 40 gefunden,

wobei M ein Alkalimetall bedeutet, der dadurch gekennzeichnet ist, daß er frei ist von organischen Verbindungen, er Phosphat in einem Molverhältnis von $P_2O_5 : SiO_2$ von $10^{-5}$ bis 0,1 enthält und zumindest Röntgenbeugungsreflexe bei Netzebenen-Abständen von $11,5 \pm 0,5$ ; $10,0 \pm 0,5$ ; $3,89 \pm 0,05$ ; $3,84 \pm 0,05$ ; $3,76 \pm 0,05$ ; und $3,67 \pm 0,05$ ($\times 10^{-8}$ cm) aufweist.

Aus der EP-A-0 054 386 ist es bekannt, Zeolithe vom Typ Nu-5 in Gegenwart einer organischen Schablonensubstanz, vorzugsweise Pentaerythrit, herzustellen. Hierbei werden Zeolithe erhalten, die, bezogen auf 1 Mol $Al_2O_3$, 1 bis 200 Mole der organischen Komponente enthalten. Diese Synthese kann auch in Gegenwart von Phosphationen erfolgen und man erhält dann Zeolithe, die neben der organischen Verbindung auch Phosphor enthalten.

Diese Literaturstellen geben jedoch keinen Hinweis auf die Möglichkeit, phosphorhaltigen Zeolith ZSM-5 herzustellen, der frei ist von organischen Verbindungen.

Von den Zeolithen gemäß DE-A-2 704 039 unterscheidet sich der Zeolith der vorliegenden Anmeldung durch den Gehalt an Phosphor und durch die Anwesenheit einer Infrarot-Bande im Bereich von 3 600 bis 3 100 cm$^{-1}$. Weiterhin zeigen die Röntgenbeugungsreflexe teilweise deutliche Intensitätsunterschiede. Als Hauptunterscheidungsmerkmal läßt sich das Verhältnis der Intensitäten der Röntgenbeugungsreflexe bei dem d-Wert von 11,2 und dem d-Wert von 10,0 heranziehen. Dieses Verhältnis liegt bei dem Zeolith gemäß DE-OS-2 704 039 zwischen 0,15 und 0,625. Bei den erfindungsgemäßen Aluminiumsilikaten ist es grundsätzlich größer als 1, sofern vollständige Kristallisation und Abwesenheit von Verunreinigungen gegeben ist. Der Röntgenbeugungsreflex mit einem d-Wert von 11,2 ist also immer stärker als der bei dem d-Wert von 10. Im allgemeinen beträgt das Verhältnis 1,3 bis 1,9.

Das Molverhältnis $SiO_2 : Al_2O_3$ liegt beim erfindungsgemäßen Zeolith vorzugsweise bei 16 bis 100, insbesondere bei 18 bis 40. Das Molverhältnis $M_2O : SiO_2$ liegt beim erfindungsgemäßen Zeolith vorzugsweise bei $10^{-6}$ bis 0,3, insbesondere bei $10^{-4}$ bis 0,1. Als Alkalimetall M werden im allgemeinen Natrium, Lithium und Kalium, vorzugsweise Natrium, eingesetzt. Das Molverhältnis $P_2O_5 : SiO_2$ beträgt vorzugsweise $10^{-4}$ bis 0,1, insbesondere $10^{-4}$ bis 0,05.

Das Phosphat kann im Aluminiumsilikat in verschiedener Form vorliegen. Es kann beispielsweise in den Hohlräumen des Zeoliths eingeschlossen oder auch in das Aluminiumsilikatgitter eingebaut sein. Die Röntgenbeugungsdiagramme der Tabellen 1 bis 3 (siehe Beispiele 2 und 3) beweisen, daß die Struktur des erfindungsgemäßen Zeoliths sehr ähnlich der des bekannten ZSM-5 ist. Das erfindungsgemäße Aluminiumsilikat unterscheidet sich jedoch von den nach bekannten Verfahren hergestellten Zeolithen ZSM-5 dadurch, daß es frei ist von organischen Verbindungen und Ammoniumionen, andererseits jedoch Phosphor enthält. Bei der thermogravimetrischen Untersuchung der neuen Zeolithe wird keine deutliche Gewichtsabnahme im Temperaturbereich von 350 bis 450 °C beobachtet, wie dies bei Zeolithen der Fall ist, die mit Hilfe von Tetraalkylammonium-Verbindungen hergestellt worden sind. Während bei diesen durch das Aufheizen eine deutliche Intensitätserhöhung der Röntgenreflexe mit den d-Werten von 11 und 10 hervorgerufen wird (siehe DE-A-3 137 729), ist bei den erfindungsgemäßen Zeolithen nur eine geringe Veränderung zu beobachten. Tabelle 3 zeigt das Röntgenbeugungsdiagramm des Zeoliths von Tabelle 2, nachdem dieser 4 Stunden auf 550 °C erhitzt worden war.

Die Erfindung betrifft weiterhin ein Verfahren zur Herstellung eines kristallinen, Phosphor enthaltenden Zeoliths des ZSM-5-Typs, wobei man Wasser, eine Siliziumdioxid-Quelle, ein Alkalihydroxid und eine Aluminium-Verbindung vermischt und bei Temperaturen von 95 bis 230 °C so lange reagieren läßt, bis der Zeolith auskristallisiert ist. Dieses Verfahren ist dadurch gekennzeichnet, daß man die Umsetzung in Gegenwart von Aluminiumphosphat durchführt. Beim erfindungsgemäßen Verfahren wird ohne Zusatz einer organischen Verbindung und in Abwesenheit von Ammoniumionen gearbeitet.

Das molare Verhältnis der Reaktionspartner $SiO_2 : Al_2O_3$ beträgt im allgemeinen 15 bis 200, vorzugsweise 20 bis 200, insbesondere 20 bis 100. Das molare Verhältnis $M_2O : SiO_2$ beträgt im allgemeinen $10^{-3}$ bis 1, vorzugsweise 0,01 bis 1, insbesondere 0,1 bis 0,5. Das molare Verhältnis $P_2O_5 : SiO_2$ beträgt im allgemeinen $10^{-4}$ bis 0,5, vorzugsweise $10^{-3}$ bis 0,2, insbesondere $10^{-2}$ bis 0,1. Das molare Verhältnis $H_2O : SiO_2$ liegt im allgemeinen über 10. Vorzugsweise liegt es bei 20 bis 100, insbesondere bei 20 bis 50. Als $SiO_2$-Quelle kann aktive Kieselsäure, wie z. B. pyrogene Kieselsäure oder Kieselsäuresol, eingesetzt werden. Bevorzugt wird im allgemeinen jedoch preiswertes Wasserglas. Der Gehalt dieser technischen Produkten an Aluminium reicht bereits gelegentlich für die Zeolith-Synthese aus. Das $SiO_2/Al_2O_3$-Molverhältnis kann verringert werden, indem eine Aluminiumverbindung wie Aluminiumhydroxid (frisch gefällt oder in Form von Hydrargillit) oder Aluminiumsulfat zugesetzt wird. Alkalihydroxid kann in freier Form oder in Form des Alkalioxidanteils des zugegebenen Wasserglases oder Alkalialuminats verwendet werden. Jedoch können auch andere alkalisch reagierende Salze, wie z. B. Alkalicarbonat, zugesetzt werden.

Es ist bevorzugt, wenn der pH-Wert der zu erhitzenden wäßrigen Lösung oder Suspension im Bereich von 8 bis 12, insbesondere 9 bis 11,7 liegt. Es ist zulässig, zur Einstellung des pH-Werts eine Säure, beispielsweise Schwefelsäure oder Phosphorsäure, dem Reaktionsansatz zuzufügen. Bei niedrigen Molverhältnissen von $OH^-/SiO_2$ werden kürzere Reaktionszeiten benötigt, jedoch steigt dabei die Gefahr, daß amorphe Anteile auftreten.

Das erfindungsgemäß verwendete Aluminiumphosphat wird vorzugsweise in fester Form eingesetzt. Dabei können lösliche Aluminiumphosphate wie $Al(H_2PO_4)_3$ oder $AlH_3(PO_4)_2 \cdot 3H_2O$, vorzugsweise aber schwerlösliches $AlPO_4$ zugegeben werden. Das Aluminiumphosphat der Formel $AlPO_4$ kann amorph sein oder Quarz-, Tridymit- oder Cristoballit-Struktur haben. Insbesondere technisches Aluminiumphosphat mit Quarzstruktur (z. B. Riedel de Haen 04207) ist für die Umsetzung geeignet. Es ist ferner möglich, das Aluminiumphosphat in dem Reaktionsgefäß aus einer Aluminiumkomponente und einer Phosphatkomponente zu bilden. Hierfür sind pH-Werte von 4 bis 7,5 von Vorteil. Die Bildung des Aluminiumphosphats kann auch in der Reaktionsmischung stattfinden. Wird schwerlösliches Aluminiumphosphat bei der Herstellung des Zeolith vom ZSM-5-Typ verwendet, so ist es notwendig durch gute Rührung für eine möglichst gleichmäßige Verteilung des Feststoffs in der Reaktionsmischung zu sorgen, da andernfalls unerwünschte kristalline Nebenprodukte, wie beispielsweise Mordenit, gebildet werden können.

Das Molverhältnis $P_2O_5/Al_2O_3$ in der Reaktionsmischung liegt vorzugsweise bei 0,1 bis 200, vorzugsweise 0,5 bis 10, insbesondere 0,9 bis 5.

Das Aluminiumphosphat kann als einzige Aluminiumkomponente in der Reaktionsmischung vorhanden sein, es ist jedoch auch möglich, noch andere Aluminiumverbindungen zuzusetzen. Nach der Kristallisation des Aluminiumsilikates ist zugegebenes festes Aluminiumphosphat im allgemeinen röntgenografisch nicht mehr nachweisbar.

Das erfindungsgemäße Verfahren wird vorzugsweise bei Reaktionstemperaturen zwischen 150 und 220 °C, insbesondere zwischen 180 und 210 °C durchgeführt. Kristallkeime sind nicht erforderlich ; ihre Anwesenheit führt jedoch zu einer Verkürzung der Reaktionszeit. Auch eine höhere Reinheit des Produktes kann durch Kristallkeime erreicht werden, insbesondere dann, wenn die Reaktionskomponenten unzureichend durchmischt werden. Die Reaktion wird hydrothermal unter dem Eigendruck der flüssigen Phase durchgeführt. Die Reaktionszeit wird so bemessen, daß der Zeolith auskristallisiert ist. Hierfür sind mitunter, vor allem bei Temperaturen oberhalb 180 °C, nur wenige Stunden notwendig. Es können jedoch auch Reaktionszeiten von mehreren Tagen erforderlich sein. Man kann die von den jeweiligen Reaktionsbedingungen abhängigen erforderlichen Reaktionszeiten durch Röntgenbeugungsdiagramme einzelner Proben ermitteln. So lassen sich Aluminiumsilikate herstellen, die ausschließlich die für ZSM-5-artige Zeolithe typischen Röntgenreflexe zeigen.

Neben Aluminium können bei der Synthese auch andere Elemente, insbesondere Bor, Indium, Gallium in geringen Mengen in das Kristallgitter eingebaut werden. Ebenso können Metalle der ersten

3

und zweiten Hauptgruppe oder der dritten bis achten Nebengruppe während der Reaktion oder auch nachträglich eingebaut werden. Die Menge an Metall, die in den Zeolith eingebaut wird, kann bis etwa 25 Gew.-% betragen. Bei geringen Anteilen dieser Elemente wird die Kristallstruktur des Zeoliths nicht wesentlich verändert. Die nachträgliche Einführung kann so erfolgen, daß der Zeolith mit einer wäßrigen Lösung imprägniert wird, in der mindestens eine Metallverbindung gelöst ist.

Die nach dem erfindungsgemäßen Verfahren hergestellten Zeolithe zeigen Molsiebeigenschaften und sind deshalb zu Adsorptionszwecken einsetzbar. Weiterhin sind sie als Katalysatoren, beispielsweise für Crack- oder Hydrocrack-Verfahren, für Isomerisierungsreaktionen, Alkylierungen und für die Methanolumwandlung verwendbar.

Für katalytische Zwecke werden die erhaltenen Aluminiumsilikate in der Regel nicht unmittelbar, sondern erst nach einer Aktivierung eingesetzt. Hierzu werden die Natriumionen gegen andere oben erwähnte Kationen, insbesondere auch gegen Wasserstoffionen, ausgetauscht. Dies kann mit Hilfe von bekannten Ionenaustausch- Reaktionen erfolgen. Der Phosphorgehalt kann dabei, insbesondere bei Verwendung von Mineralsäuren, sinken. Eine Kalzinierung des Zeoliths vor dem Ionenaustausch ist möglich, aber nicht erforderlich. Vorzugsweise wird bei Temperaturen über 400 °C kalziniert.

Eine besondere Variante des erfindungsgemäßen Verfahrens besteht darin, daß man die Reaktion kontinuierlich oder halbkontinuierlich in einem Rührkessel durchführt, wobei die Zugabedauer der einzelnen Komponenten 1 bis 100 % der Reaktionsdauer betragen soll. Für diese Variante gilt folgendes :

In dem benutzten Rührgefäß soll das Verhältnis von Höhe zu Durchmesser vorzugsweise unter 2 liegen, damit eine möglichst gute Durchmischung innerhalb des Gefäßes möglich ist.

Die Reaktionstemperatur für die Kristallisation des Aluminiumsilikats beträgt vorzugsweise 120 bis 220 °C und insbesondere 150 bis 200 °C. Fast immer wird über 100 °C gearbeitet, so daß wegen des Druckes, der sich über der wäßrigen Reaktionsmischung einstellt, ein Autoklav erforderlich wird. Eine zusätzliche Druckerhöhung durch Zugabe eines Inertgases bringt keine Vorteile. Auch während der Zugabe der Reaktionskomponenten soll die Temperatur im angegebenen Temperaturintervall liegen. Dies ist besonders leicht möglich, wenn die zugegebenen Substanzen bereits aufgeheizt sind.

Da im Regelfall der Druck im Rührkessel größer als 1 bar ist, ist für das Eindosieren der Reaktionskomponenten eine Pumpe notwendig. Es kann hierfür eine einzige Pumpe ausreichend sein ; es ist jedoch auch möglich, einzelne Komponenten getrennt zuzugeben, so daß 2 oder auch 3 Pumpen an verschiedenen Zulaufstellen des Autoklaven erforderlich werden. Es ist bevorzugt, saure Reaktionskomponenten (Aluminiumsulfat, Phosphorsäure) und basische Reaktionskomponenten (Natriumaluminat, Natriumsilikat, Natronlauge) getrennt einzudosieren, um eine vorzeitige Gelbildung zu vermeiden.

Die Ausgangsprodukte können nacheinander zugegeben werden ; bevorzugt wird jedoch eine gleichzeitige Zugabe. Es ist bevorzugt, wenn die Zugabedauer für jede Komponente 10 bis 100, insbesondere 20 bis 80 % der Reaktionsdauer (mittlere Verweilzeit) beträgt.

Wenn während der Zugabe nicht gleichzeitig Produkt abgeführt wird, so steigt der Inhalt im Rührgefäß an. Die Zugabe muß dann spätestens beendet werden, wenn der maximale Füllstand erreicht ist. Wenn die Komponenten sehr rasch zugegeben wurden, so muß im Reaktionsgefäß noch weiter gerührt werden, um eine ausreichende Bildung von Zeolith durch Nachkristallisation zu erreichen. Anschließend wird das Produkt aus dem noch heißen Autoklaven entfernt. Es kann jedoch vorteilhaft sein, diese Nachkristallisation in einem zweiten Gefäß, das ebenfalls als Rührgefäß ausgebildet ist, durchzuführen. Die Dauer der Nachkristallisation soll maximal der 99-fachen, vorzugsweise maximal der 20-fachen und insbesondere (bei hohen Temperaturen) nur der 9-fachen oder sogar nur der 4-fachen Zugabedauer entsprechen.

Vorteilhafterweise wird das erste bzw. einzige Rührgefäß nie vollständig entleert, sondern es soll stets Produktmischung enthalten, die aus dem auskristallisierten Aluminiumsilikat und der Mutterlauge inklusive nicht umgesetzter Ausgangsprodukte besteht. Damit verbleibt ein hoher Anteil an Zeolith-Kristallen im Autoklaven, wodurch die weitere Bildung von Zeolith gefördert wird.

Das Gewichtsverhältnis von Zeolith-Kristallen zu gelöstem $SiO_2$ in der Reaktionsmischung soll (nach Einstellen stationärer Bedingungen) über 0,05, vorzugsweise über 0,1 und insbesondere über 0,2 liegen. Bei vollkontinuierlicher Reaktionsführung werden dabei konstante Werte erhalten, die häufig über 0,5 liegen. Bei teilkontinuierlicher Reaktionsführung werden diese Werte zeitweise über- und zeitweise unterschritten.

Bei vollkontinuierlicher Reaktionsführung und idealer Durchmischung ist es auch möglich, daß im Rührkessel, wie auch im ausgetragenen Produkt, mehr kristalliner Zeolith als gelöstes Silikat vorhanden ist.

Soll das Produkt aus dem noch unter Druck befindlichen Autoklaven entleert werden, so kann dies mit einem entsprechenden Bodenablaßventil erreicht werden. Wenn keine vollständige Entleerung gewünscht wird, so kann das Produkt vorteilhafterweise über ein Steigrohr entleert werden, das in die Reaktionsmischung eintaucht und mit einem Ventil verschlossen wird. Durch die Länge des Steigrohres wird festgelegt, wieviel Produkt maximal entfernt werden kann.

Vorteilhafterweise wird das erfindungsgemäße Verfahren vollkontinuierlich betrieben. Neben der kontinuierlichen Zuführung der Ausgangskomponenten ist hierfür ein kontinuierlicher Austrag der Reaktionsprodukte erforderlich. Dies kann beispielsweise mit einem Steigrohr geschehen. Zur Überwachung des Reaktionsgefäßes kann es erforderlich sein, den Füllstand durch eine Füllstandsanzeige oder durch eine Gewichtsmessung des Apparates zu kontrollieren.

Die Reaktionszeit wird im allgemeinen aus wirtschaftlichen Gründen so bemessen, daß mindestens 10 % des zugegebenen Silikats als Zeolith auskristallisiert sind. Bei höheren Reaktionstemperaturen sind geringe Reaktionszeiten erforderlich. Bei Temperaturen oberhalb 180 °C reichen mitunter Zeiten von weniger als 1 Stunde aus. Es können jedoch auch Reaktionszeiten von mehreren Tagen erforderlich werden. Man kann die von den jeweiligen Reaktionsbedingungen abhängigen erforderlichen Reaktionszeiten durch Röntgenbeugungsdiagramme einzelner Proben ermitteln. Nach dem erfindungsgemäßen Verfahren lassen sich Aluminiumsilikate herstellen, die ausschließlich die für ZSM-5-artige Zeolithe typischen Röntgenreflexe zeigen.

Das Verhältnis von kristallinem Zeolith zu gelöstem Silikat wird in der Hauptsache durch die mittlere Verweilzeit wie auch durch die Zusammensetzung (insbesondere den pH-Wert) bestimmt. Eine Erhöhung der mittleren Verweilzeit erhöht den Zeolithanteil, begünstigt mitunter jedoch auch die Bildung von Nebenprodukten. Aus wirtschaftlichen Gründen kann es sinnvoll sein, bei kürzeren Verweilzeiten sich mit einem geringeren Anteil an Zeolith zufrieden zu geben.

Die Erfindung wird durch die Beispiele näher erläuter.

### Beispiel 1 (Vergleichsbeispiel)

Die Reaktionsmischung hat folgende molare Zusammensetzung :

$$0,343 \; Na_2O : 0,030 \; Al_2O_3 : SiO_2 : 0,074 \; SO_3 : 41 \; H_2O.$$

Die Reaktionsmischung wird hergestellt, indem 222,56 g technisches Wasserglas (27 % $SiO_2$, 8,43 % $Na_2O$, 0,24 % $Al_2O_3$) zu 594,4 g Wasser gegeben werden. Danach werden 3,23 NaOH und 16,50 g $Al_2(SO_4)_3 \cdot 18 \; H_2O$ unter Rühren zugefügt. Die Reaktionsmischung wird 18 Stunden bei 180 °C in einem Edelstahl-Autoklaven unter autogenem Druck gerührt. Nach dem Abkühlen wird die Reaktionsmischung filtriert, mit Wasser gewaschen und 4,5 Stunden bei 120 °C getrocknet. Das Produkt zeigt das Röntgenbeugungsdiagramm des Na-Mordenit : Reflexe, die für ZSM-5-artige Zeolithe typisch sind, werden nicht beobachtet.

### Beispiel 2

Die Reaktionsmischung hat die folgende molare Zusammensetzung :

$$0,303 \; Na_2O : 0,035 \; Al_2O_3 : SiO_2 : 0,059 \; SO_3 : 0,029 \; 3 \; P_2O_5 : 41 \; H_2O.$$

Die Reaktionsmischung wird hergestellt, indem 222,56 g technisches Wasserglas (27 % $SiO_2$, 8,43 % $Na_2O$, 0,24 % $Al_2O_3$) zu 594,4 g Wasser gegeben werden. Danach werden 8,0 g technisches Aluminiumphosphat (Riedel-de Haen 04 207, 38 % $Al_2O_3$, 52 % $P_2O_5$, 10 % Gewichtsverlust beim Erhitzen auf 600 °C), welches Quarzmodifikation hat, zugefügt. Ferner werden aus Gründen besserer Vergleichbarkeit mit Beispiel 1 noch 6 g $H_2SO_4$ (96 %ig) zugegeben. Danach lag der pH-Wert bei 10,7, wenn 10 g Reaktionsmischung mit 250 ml Wasser verdünnt werden.

Die Reaktionsmischung wird 18 Stunden bei 180 °C in einem Edelstahl-Autoklaven unter autogenem Druck gerührt. Nach dem Abkühlen wird die Reaktionsmischung filtriert, mit Wasser gewaschen und bei 120 °C getrocknet. Das Produkt zeigt ein Röntgenbeugungsdiagramm, wie es für ZSM-5-artige Zeolithe typisch ist (vgl. Tabelle 1). Dabei gibt die erste Spalte die Netzebenenabstände und die zweite die relative Intensität (stärkster Peak = 100) an.

### Beispiel 3

Die Reaktionsmischung hat folgende molare Zusammensetzung :

$$0,303 \; Na_2O : 0,042 \; 5 \; Al_2O_3 : SiO_2 : 0,097 \; P_2O_5 : 41 \; H_2O.$$

Die Reaktionsmischung wird hergestellt, indem 222,56 g technisches Wasserglas zu 594,4 g Wasser gegeben werden.

Danach werden 10,0 g technisches Aluminiumphosphat ($AlPO_4$) und 13,9 g 85 %ige Phosphorsäure zugefügt. Die Reaktionsmischung wird 18 Stunden bei 190 °C in einem Edelstahl-Autoklaven unter autogenem Druck gerührt. Nach dem Abkühlen wird die Reaktionsmischung filtriert, mit Wasser gewaschen und bei 120 °C getrocknet. Das Produkt hat folgende Zusammensetzung :

$$77,9 \% \; SiO_2, \; 6,8 \% \; Al_2O_3, \; 5,4 \% \; Na_2O, \; 3,2 \% \; P_2O_5.$$

Aus der Differenz zu 100 errechnet sich ein Wassergehalt von 6,7 %. Das entspricht einer molaren Zusammensetzung von 19,4 $SiO_2$ : $Al_2O_3$ : 1,3 $Na_2O$ : 0,3 $P_2O_5$ : 5,6 $H_2O$.

Das Aluminiumsilikat zeigt das Röntgenbeugungsdiagramm der Tabelle 2.

Durch Extraktion mit 1 N $NH_4Cl$-Lösung bei 100 °C und anschließender Kalzinierung läßt sich der $Na_2O$-Gehalt auf 0,16 % senken. Wird statt dessen mit 1 N Salzsäure extrahiert, so wird ein $Na_2O$-Gehalt von 0,09 % erhalten.

Wenn das oben erhaltene bei 120 °C getrocknete Rohprodukt 4 Stunden auf 550 °C erhitzt wird, so zeigt es das Röntgenbeugungsdiagramm der Tabelle 3.

Beispiel 4

Die Reaktionsmischung hat folgende molare Zusammensetzung :

0,303 $Na_2O$ : 0,023 9 $Al_2O_3$ : $SiO_2$ : 0,079 $P_2O_5$ : 41 $H_2O$.

Es werden 2,226 kg technisches Wasserglas mit 5,94 kg Wasser verdünnt. Danach werden 50 g technisches Aluminiumphosphat ($AlPO_4$) und 139 g 85 %ige Phosphorsäure zugefügt. Diese Reaktionsmischung wird bei 180 °C in einem zuvor noch nie benutzten 10 l-Edelstahl-Autoklaven unter autogenem Druck langsam gerührt. Kristallkeime waren weder am Reaktionsgefäß vorhanden, noch wurden sie zugefügt. Nach 18 Stunden zeigte das Röntgenbeugungsdiagramm neben dem Hauptprodukt eines ZSM-5-artigen Aluminiumsilikats noch Magadiit. Nach weiteren 18 Stunden bei 180 °C ist neben dem ZSM-5-artigen Hauptprodukt in geringen Mengen Mordenit und Tridymit festzustellen.

Beispiel 5

a) Versuchsapparatur

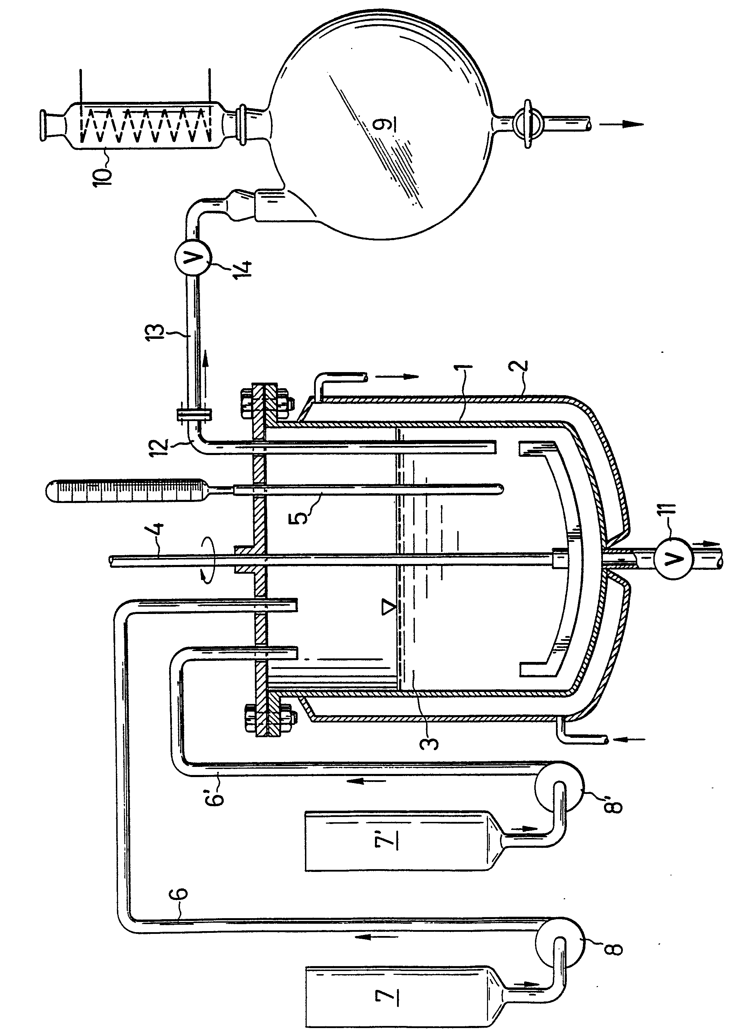

Die verwendete Apparatur ist in der Figur dargestellt. Der Rührautoklav (1) hat ein Nettovolumen von etwa 2 l, einen Innendurchmesser von 14 cm und eine maximale Innenhöhe von 17,5 cm. Er wird mit Öl durch den Heizmantel (2) beheizt. Die in (1) entstandene Reaktionsmischung (3) wird durch einen Rührer (4) gut durchmischt. Die Innentemperatur wird mit einem Thermometer in einer Thermometerhülse (5) kontrolliert. Die Temperaturmessung wird zur Regelung der Öltemperatur verwendet, um eine Temperaturkonstanz von (3) zu erreichen. Die Ausgangsprodukte werden in den Vorratsgefäßen (7) und (7') vorgelegt und mit Hilfe der Pumpen (8) und (8') über die Leitungen (6) und (6') dem Rührautoklav zugeführt. (7) enthält das Wasserglas mit etwas Wasser verdünnt, (7') die restlichen Ausgangsprodukte. Durch Einstellung der Hubhöhe und der Frequenz der Pumpen wird die Zugabedauer gesteuert. Die Zuleitungen sind durch die Ventile (nicht gezeichnet) verschlossen. Der Rührautoklav ist weiterhin mit einem Manometer (nicht gezeichnet) und einem Sicherheitsventil (nicht gezeichnet) versehen.

Das Reaktionsprodukt kann bei Beendigung des Versuchs über das Bodenauslaßventil (11) ausgetragen werden. Für eine nur teilweise Entleerung des Autoklaven (1) wird das Produkt über das Steigrohr (12) und Leitung (13) ausgetragen. Leitung (13) ist mit Ventil (14) versehen. Durch entsprechende Regelung von (14) wird das Produkt portionsweise oder kontinuierlich ausgetragen. Der Füllstand von (3) entspricht der Innenhöhe unterhalb des Steigrohrs und maximal der Innenhöhe des Autoklaven. Das Produkt wird über Leitung (13) in den 2 l-Zweihalskolben (9) überführt, der mit einem Rückflußkühler (10) zur Kondensation des Wasserdampfes versehen ist. Der Kolben (9) wird portionsweise kontinuierlich entleert. Das Produkt wird filtriert, gewaschen und in bekannter Weise aufgearbeitet.

b) Versuchsdurchführung (halbkontinuierlich)

Der Rührautoklav (1) wird mit 445 g Natriumwasserglas (27 % $SiO_2$, 8,43 % $Na_2O$, 0,24 % $Al_2O_3$), 1 189 g Wasser, 10 g Aluminiumphosphat (38 % $Al_2O_3$, 52 % $P_2O_5$, 10 % Gewichtsverlust beim Erhitzen auf 600 °C), 27,8 g 85 %iger Phosphorsäure und 20 g ZSM-5-artigen Zeolith (aus einem entsprechenden früheren Versuch) gefüllt.

Die Reaktionsmischung hat folgende molare Zusammensetzung :

0,303 $Na_2O$ : 0,024 $Al_2O_3$ : $SiO_2$ : 0,079 $P_2O_5$ : 41 $H_2O$

Der zugefügte Zeolith bleibt dabei unberücksichtigt.

Die Reaktionsmischung wird 5,5 h bei 190 °C gerührt, anschließend werden über das Steigrohr (12) ca. 1 400 ml Produktmischung abgelassen. Diese wird filtriert, der abgetrennte Feststoff getrocknet. Man erhält 95 g kristallines Produkt. Das Röntgenbeugungsdiagramm zeigt das typische Bild eines ZSM-5-artigen Zeolith.

Zu der im Rührautoklaven verbliebenen Produktmischung wird bei einer Innentemperatur von 160-164 °C innerhalb 40 Minuten erneut die oben beschriebene Summe der Ausgangsprodukte (ohne Zeolith) über die beiden Pumpen zudosiert. Die Leitungen werden mit insgesamt 150 ml Wasser anschließend gespült. Die Reaktionsmischung wird zwei Stunden bei 200 °C gerührt ; anschließend werden innerhalb

6

10 Minuten ca. 1 500 ml Produktmischung über das Steigrohr abgelassen. Man erhält daraus 72 g ZSM-5-artigen Zeolith. Zu der verbliebenen Produktmischung wird bei 185 °C innerhalb 45 Minuten erneut die oben beschriebene Summe der Ausgangsprodukte gepumpt. Der Autoklav wird 16,5 Stunden bei 170 °C gerührt. 1 150 ml Produktmischung werden abgelassen ; daraus werden 96 g Zeolith erhalten. Zu der verbliebenen Produktmischung wird erneut die oben beschriebene Summe der Ausgangsprodukte gepumpt. Anschließend wird 4,5 Stunden bei 200 °C gerührt. Über das Steigrohr werden etwa 1 500 ml. Produktmischung entfernt. Daraus werden nach Trocknung bei 120 °C 82 g Zeolith erhalten. Der Autoklav wird abgekühlt und vollständig entleert. Man erhält aus der verbliebenen Produktmischung von etwa 420 ml nach Trocknug 52 g Zeolith. Die Kristallinität aller Zeolithproben ist sehr gut. Das Röntgenbeugungsdiagramm der letzten Probe ist in Tabelle 4 aufgeführt.

Beispiel 6

Die Umsetzung erfolgt unter gleichzeitiger Zugabe der Edukte und Abführung der Produkte mit Nachkristallisation.

Die Versuchsapparatur entspricht der von Beispiel 5. Der Rührautoklav wird mit den in Beispiel 5 beschriebenen Ausgangsmaterialien gefüllt. Die Menge an zugegebenem Zeolith wird auf 50 g erhöht. Nach dem Aufheizen des Rührgefäßes auf 200 °C und zweistündiger Rührung (zur Nachkristallisation) bei konstanter Temperatur wird innerhalb einer Stunde eine gleiche Reaktionsmischung wie zu Beginn (ohne Zeolith) mit Hilfe der Pumpen zudosiert, und gleichzeitig werden etwa 1 550 ml Reaktionsmischung über das Steigrohr abgelassen. Der Füllstand im Reaktionsgefäß bleibt so annähernd konstant. Die abgelassene Reaktionsmischung wird nach dem Abkühlen filtriert, der Filterkuchen getrocknet. Man erhält 117 g eines ZSM-5-artigen Zeoliths, dessen Röntgenbeugungsdiagramm nur die für Zeolithe vom ZSM-5-Typ charakteristischen Reflexe aufweist.

Die Reaktionsmischung im Autoklaven wird erst eine Stunde bei 200 °C und dann 17 Stunden (über Nach 0 bei 75 °C gerührt. Die Temperatur wird auf 200 °C erhöht ; anschließend wird innerhalb zwei Stunden die obige Eduktmischung (ohne Zeolith) zugepumpt, und gleichzeitig werden etwa 2 l Produktmischung ausgetragen. Die Produktmischung wird filtriert, getrocknet und röntgenographisch untersucht. Das Produkt zeigt die typischen Röntgenreflexe eines ZSM-5-artigen Zeoliths. Daneben werden in sehr geringer Menge Reflexe eines Mordenitartigen Zeoliths beobachtet. Die Reaktionsmischung im Autoklaven wird weitere zwei Stunden gerührt und dann über das Steigrohr ausgetragen.

| | Tabelle 1 | | Tabelle 2 | | Tabelle 3 | |
|---|---|---|---|---|---|---|
| | $d(10^{-8}$ cm$)$ | $(I/I_o)$ | $d(10^{-8}$ cm$)$ | $(I/I_o)$ | $d(10^{-8}$ cm$)$ | $(I/I_o)$ |
| | 11,2 | 70 | 11,3 | 64 | 11,3 | 67 |
| | 10,1 | 33 | 10,0 | 36 | 10,22 | 41 |
| | 10,0 | 33 | 9,83 | 16 | 10,15 | 39 |
| | 9,83 | 18 | 9,07 | 3 | 9,94 | 16 |
| | 9,03 | 5 | 7,47 | 5 | 9,12 | 3 |
| | 7,47 | 5 | 7,11 | 2 | 8,15 | 2 |
| | 7,11 | 3 | 6,73 | 8 | 7,53 | 4 |
| | 6,73 | 9 | 6,39 | 12 | 7,14 | 3 |
| | 6,56 | 4 | 6,03 | 14 | 6,78 | 8 |
| | 6,39 | 17 | 5,74 | 12 | 6,44 | 14 |
| | 6,03 | 16 | 5,61 | 13 | 6,05 | 17 |
| | 5,72 | 14 | 5,41 | 3 | 5,75 | 12 |
| | 5,59 | 15 | 5,16 | 2 | 5,64 | 14 |
| | 5,39 | 4 | 5,01 | 8 | 5,42 | 4 |
| | 5,16 | 3 | 4,63 | 6 | 5,19 | 3 |
| | 5,04 | 5 | 4,39 | 10 | 5,07 | 5 |
| | 5,00 | 8 | 4,28 | 12 | 5,02 | 7 |
| | 4,87 | 2 | 4,10 | 4 | 4,66 | 6 |
| | 4,62 | 8 | 4,03 | 8 | 4,40 | 12 |
| | 4,52 | 3 | 3,87 | 100 | 4,29 | 16 |
| | 4,37 | 13 | 3,83 | 77 | 4,11 | 5 |
| | 4,28 | 17 | 3,77 | 41 | 4,04 | 8 |
| | 4,10 | 9 | 3,74 | 53 | 3,88 | 100 |
| | 4,02 | 10 | 3,67 | 31 | 3,85 | 75 |
| | 4,00 | 6 | 3,61 | 7 | 3,78 | 43 |
| | 3,88 | 100 | 3,50 | 8 | 3,75 | 54 |
| | 3,83 | 75 | 3,45 | 12 | 3,67 | 31 |
| | 3,76 | 42 | 3,38 | 11 | 3,62 | 5 |
| | 3,73 | 51 | 3,37 | 11 | 3,51 | 9 |
| | 3,66 | 34 | 3,32 | 11 | 3,47 | 11 |
| | 3,60 | 4 | 3,26 | 5 | 3,39 | 10 |
| | 3,49 | 9 | 3,20 | 3 | 3,33 | 12 |

(Fortsetzung)

| Tabelle 1 | | Tabelle 2 | | Tabelle 3 | |
|---|---|---|---|---|---|
| d(10⁻⁸ cm) | (I/I$_o$) | d(10⁻⁸ cm) | (I/I$_o$) | d(10⁻⁸ cm) | (I/I$_o$) |
| 3,45 | 15 | 3,15 | 3 | 3,27 | 5 |
| 3,38 | 27 | 3,06 | 9 | 3,20 | 2 |
| 3,32 | 13 | 3,00 | 14 | 3,16 | 2 |
| 3,25 | 5 | 2,99 | 15 | 3,07 | 13 |
| 3,15 | 5 | 2,95 | 5 | 3,00 | 14 |
| 3,06 | 17 | 2,88 | 4 | 2,99 | 14 |
| 3,00 | 17 | 2,80 | 4 | 2,96 | 6 |
| 2,99 | 17 | 2,74 | 6 | 2,88 | 3 |
| 2,95 | 8 | 2,61 | 4 | 2,75 | 6 |
| 2,88 | 5 | 2,25 | 4 | 2,70 | 2 |
| 2,84 | 3 | 2,50 | 5 | 2,62 | 4 |
| 2,74 | 7 | 2,42 | 3 | 2,53 | 3 |
| 2,69 | 3 | 2,40 | 4 | 2,50 | 5 |
| 2,61 | 5 | | | 2,43 | 3 |
| 2,52 | 5 | | | 2,40 | 3 |

Tabelle 4

| Netzebenabstände d(10⁻⁸ cm) | Relative Intensität (I/I$_o$) |
|---|---|
| 11,3 | 75 |
| 10,2 | 42 |
| 9,88 | 18 |
| 9,07 | 3 |
| 7,53 | 5 |
| 7,17 | 3 |
| 6,78 | 8 |
| 6,44 | 16 |
| 6,05 | 20 |
| 5,77 | 14 |
| 5,62 | 14 |
| 5,42 | 5 |
| 5,17 | 3 |
| 5,07 | 7 |
| 5,01 | 9 |
| 4,90 | 1 |
| 4,65 | 7 |
| 4,48 | 2 |
| 4,40 | 12 |
| 4,29 | 16 |
| 4,12 | 4 |
| 3,95 | 8 |
| 3,88 | 100 |
| 3,84 | 76 |
| 3,78 | 39 |
| 3,75 | 53 |
| 3,68 | 35 |
| 3,62 | 5 |
| 3,57 | 2 |
| 3,51 | 8 |
| 3,47 | 12 |
| 3,42 | 5 |
| 3,39 | 6 |
| 3,38 | 9 |
| 3,33 | 13 |
| 3,27 | 7 |
| 3,20 | 3 |
| 3,16 | 5 |
| 3,07 | 15 |
| 3,01 | 15 |

| Netzebenabstände $d(10^{-8}$ cm) | Relative Intensität $(I/I_o)$ |
|---|---|
| 2,99 | 15 |
| 2,96 | 8 |
| 2,88 | 5 |
| 2,85 | 2 |
| 2,80 | 2 |
| 2,75 | 6 |
| 2,69 | 3 |
| 2,67 | 2 |
| 2,65 | 1 |
| 2,63 | 6 |
| 2,60 | 4 |
| 2,58 | 3 |
| 2,53 | 5 |
| 2,50 | 7 |
| 2,46 | 2 |
| 2,43 | 4 |
| 2,41 | 5 |
| 2,37 | 1 |
| 2,34 | 3 |

**Patentansprüche**

1. Kristalliner Zeolith des ZSM-5-Typs mit einem Molverhältnis von :
$SiO_2 : Al_2O_3$ von 15 bis 200,
$M_2O : SiO_2$ von $10^{-6}$ bis 1 und
$H_2O : SiO_2$ von 0 bis 40
wobei M ein Alkalimetall bedeutet, dadurch gekennzeichnet, daß er frei ist von organischen Verbindungen, er Phosphat in einem Molverhältnis von $P_2O_5 : SiO_2$ von $10^{-5}$ bis 0,1 enthält und zumindest Röntgenbeugungsreflexe bei Netzebenen-Abständen von $11,5 \pm 0,5$ ; $10,0 \pm 0,5$ ; $3,89 \pm 0,05$ ; $3,84 \pm 0,05$ ; $3,76 \pm 0,05$ ; und $3,67 \pm 0,05$ ($\times 10^{-8}$ cm) aufweist.

2. Verfahren zur Herstellung eines kristallinen, Phosphor enthaltenden Zeoliths des ZSM-5-Typs, wobei man Wasser, eine Siliziumdioxid-Quelle, ein Alkalihydroxid und eine Aluminium-Verbindung vermischt und bei Temperaturen von 95 bis 230 °C so lange reagieren läßt, bis der Zeolith auskristallisiert, das dadurch gekennzeichnet ist, daß man die Umsetzung ohne Zusatz einer organischen Verbindung aber in Gegenwart von Aluminiumphosphat durchführt.

3. Verfahren nach Anspruch 2, dadurch gekennzeichnet, daß das molare Verhältnis der Reaktionspartner
$SiO_2 : Al_2O_3$ von 15 bis 200, und
$P_2O_5 : SiO_2$ von $10^{-4}$ bis 0,5 beträgt.

4. Verfahren nach Anspruch 2, dadurch gekennzeichnet, daß zur Mischung der Reaktionspartner festes $AlPO_4$ gegeben wird.

5. Verfahren nach Anspruch 2, dadurch gekennzeichnet, daß man die Reaktion kontinuierlich oder halbkontinuierlich in einem Rührkessel durchführt, wobei die Zugabedauer der einzelnen Komponenten 1 bis 100 % der Reaktionsdauer betragen soll.

**Claims**

1. Crystalline zeolite of the ZSM-5 type having a molar ratio of
$SiO_2 : Al_2O_3$ of from 15 to 200,
$M_2O : SiO_2$ of from $10^{-6}$ to 1 and
$H_2O : SiO_2$ of from 0 to 40,
M being an alkali metal, characterized in that it is free from organic compounds, contains phosphate in a molar ratio of $P_2O_5 : SiO_2$ of from $10^{-5}$ to 0.1, and has X-ray reflections at least at an interplanar spacing of $11.5 \pm 0.5$ ; $10.0 \pm 0.5$ ; $3.89 \pm 0.05$ ; $3.84 \pm 0.05$ ; $3.76 \pm 0.05$ ; and $3.67 \pm 0.05$ ($\times 10^{-8}$ cm).

2. Process for the manufacture of a crystalline, phosphoruscontaining zeolite of the ZSM-5 type be mixing water, a silicon dioxide source, an alkali metal hydroxide and an aluminum compound, and reacting this mixture at a temperature of from 95 to 230 °C until the zeolite has crystallized, characterized by carrying out the reaction without addition of an organic compound, but in the presence of aluminum phosphate.

3. The process as claimed in Claim 2, characterized by a molar ratio of the reactants

$SiO_2 : Al_2O_3$ is from 15 to 200 and $P_2O_5 : SiO_2$ is form $10^{-4}$ to 0.5.

4. The process as claimed in Claim 2, characterized by adding solid $AlPO_4$ to the mixture of the reactants.

5. The process as claimed in Claim 2, characterized by carrying out the reaction continuously or semi-continuously in a stirred vessel, the time of addition of the individual components being from 1 to 100 % of the reaction time.

**Revendications**

1. Zéolite cristalline du type ZSM-5, ayant un rapport molaire :
de 15 à 200 pour $SiO_2 : Al_2O_3$,
de $10^{-6}$ à 1 pour $M_2O : SiO_2$, et
de 0 à 40 pour $H_2O : SiO_2$,
où M représente un métal alcalin, caractérisée en ce qu'elle est exempte de composés organiques, qu'elle contient des phosphates selon un rapport molaire de $10^{-5}$ à 0,1 pour $P_2O_5 : SiO_2$, et qu'elle présente au diagramme de diffraction aux rayons X au moins les réflexions correspondant aux écartements suivants entre les plans réticulaires : $11,5 \pm 0,5$ ; $10,0 \pm 0,5$ ; $3,89 \pm 0,05$ ; $3,84 \pm 0,05$ ; $3,76 \pm 0,05$ et $3,67 \pm 0,05$ ($\times 10^{-8}$ cm).

2. Procédé pour la fabrication d'une zéolite du type ZSM-5, cristalline, contenant du phosphore, dans lequel on mélange de l'eau, une source de dioxyde de silicium, un hydroxyde de métal alcalin et un composé de l'aluminium, et on les laisse réagir à des températures de 95 à 230 °C jusqu'à ce que la zéolite se sépare par cristallisation, caractérisé en ce qu'on réalise la réaction sans addition d'un composé organique, mais en présence de phosphate d'aluminium.

3. Procédé selon la revendication 2, caractérisé en ce que le rapport molaire entre les substances participant à la réaction est
de 15 à 200 pour $SiO_2 : Al_2O_3$, et
de $10^{-4}$ à 0,5 pour $P_2O_5 : SiO_2$.

4. Procédé selon la revendication 2, caractérisé en ce qu'on ajoute du $AlPO_4$ solide au mélange des substances participant à la réaction.

5. Procédé selon la revendication 2, caractérisé en ce qu'on met en œuvre la réaction en continu ou en semi-continu dans un réacteur muni d'un agitateur, la durée d'addition des différents constituants devant être de 1 à 100 % de la durée de la réaction.